# EUROPÄISCHE PATENTANMELDUNG

(11) **EP 4 292 751 A1**
(43) Veröffentlichungstag der Anmeldung: **20.12.2023**
(21) Anmeldenummer: 22179198.1
(22) Anmeldetag: 15.06.2022
(51) Int. Cl.: B23K 26/08, B23K 26/70, B23K 37/02, B23K 37/06

(54) **LASERBEARBEITUNGSMASCHINE, INSBESONDERE LASERSCHNEIDMASCHINE, MIT EINER FUNKENSCHUTZVORRICHTUNG**

(71) Anmelder: Bystronic Laser AG, 3362 Niederönz (CH)
(72) Erfinder: Giovanoli, Lino, 4912 Aarwangen (CH); Flückiger, Christian, 4935 Leimiswil (CH)
(74) Vertreter: Fink Numrich Patentanwälte PartmbB

(57) **Zusammenfassung**

Die Erfindung beschreibt eine Laserbearbeitungsmaschine (100), insbesondere Laserschneidmaschine, mit einem Maschinenrahmen (110), der zwei in einer ersten Richtung (X) verlaufende Längsträger (111, 112) aufweist, und mit einer in einer zweiten, quer zur ersten Richtung (X) verlaufenden, Richtung (Y) verlaufenden Brücke (113) mit einem Laserbearbeitungskopf (121). Die Brücke (113) ist auf den zwei Längsträgern (111, 112) in der ersten Richtung (X) verfahrbar angeordnet. In einem Bearbeitungsraum (117) ist zwischen den zwei Längsträgern (111, 112) eine Werkstückebene (WE) der Laserbearbeitungsmaschine (100) für die Aufnahme und Bearbeitung eines Werkstücks (130) ausgebildet, wobei die Werkstückebene (WE) sich in der ersten Richtung (X) und der zweiten Richtung (Y) im Bereich eines Übergangs (119, 120) von der Brücke (113) zu den zwei Längsträgern (111, 112) erstreckt. Im Bereich des Übergangs (119, 120) ist eine Funkenschutzvorrichtung (140, 141) angeordnet, die eine sich in der ersten Richtung (X) erstreckende Hauptabweisfläche (142) aufweist, wobei die Hauptabweisfläche (142) quer zur ersten Richtung (X) in Bezug auf die Werkstückebene (WE) in Richtung des Bearbeitungsraums (117) in einem ersten Neigungswinkel (W1) kleiner 90° geneigt ist zur Ablenkung von Funken in den Bearbeitungsraum (117) in einer dem Laserbearbeitungskopf (121) abgewandten Richtung.

## Beschreibung

Die vorliegende Erfindung betrifft eine Laserbearbeitungsmaschine, insbesondere eine Laserschneidmaschine, mit einem Maschinenrahmen, der zwei in einer ersten Richtung verlaufende Längsträger aufweist, und mit einer in einer zweiten, quer zur ersten Richtung verlaufenden, Richtung verlaufenden Brücke mit einem Laserbearbeitungskopf, die auf den zwei Längsträgern in der ersten Richtung verfahrbar angeordnet ist. In einem Bearbeitungsraum zwischen den zwei Längsträgern ist eine Werkstückebene der Laserbearbeitungsmaschine für die Aufnahme und Bearbeitung eines Werkstücks ausgebildet. Die Werkstückebene erstreckt sich in der ersten Richtung und der zweiten Richtung im Bereich eines Übergangs von der Brücke zu den zwei Längsträgern.

Bei der Bearbeitung eines Werkstücks mittels des Laserbearbeitungskopfs der Laserbearbeitungsmaschine entstehen im Bereich einer Bearbeitungsstelle, an der ein Laser auf das Werkstück trifft, Funken, welche sich im Bearbeitungsprozess in radialer Richtung von der Bearbeitungsstelle wegbewegen. Zusammen mit den Funken werden Schmutzpartikel, die durch von dem Werkstück abgetragenes Material entstehen, von der Bearbeitungsstelle in radialer Richtung weggeschleudert. Aufgrund der den Funken und den Schmutzpartikeln innenwohnenden kinetischen und thermischen Energie, die eine Gefahr für einen Bediener in der Umgebung der Laserbearbeitungsmaschine darstellen können, sind aus dem Stand der Technik Funkenschutzvorrichtungen bekannt.

Die JP 2019- 107 653 A2 offenbart eine Funkenschutzvorrichtung, die um den Laserbearbeitungskopf herum angeordnet ist und sich mit diesem bewegt, um die Streuung von Spritzern zum Zeitpunkt der Laserbearbeitung zu verhindern. Aus der CN 212 705 012 U ist das Vorsehen einer Schutzhaube um den Laserbearbeitungskopf herum bekannt. Diese aus dem Stand der Technik bekannten Funkenschutzvorrichtungen ermöglichen einen Schutz eines Bedieners der Laserbearbeitungsmaschine vor Funken während der Bearbeitung des Werkstücks.

Aus der DE 20 2020 102 323 U1 ist es ferner bekannt, eine Bearbeitungsmaschine zur thermischen Bearbeitung von Werkstücken in einem Arbeitsbereich mit einer Absauganlage zu versehen. Hierzu ist eine Absaugkammer unterhalb des Arbeitsbereiches vorgesehen, die mit einem Absaugkanal verbunden ist. Eine Aufweitung des Absaugkanals ist als Partikelrutsche vorgesehen. Diese Bearbeitungsmaschine erfordert zur Beseitigung von während eines Bearbeitungsvorgangs entstehender Partikel eine verhältnismäßig aufwändige Vorrichtung.

Es ist Aufgabe der Erfindung, eine Laserbearbeitungsmaschine, insbesondere eine Laserschneidmaschine anzugeben, welche in der Lage ist, die beim Bearbeiten eines Werkstücks entstehenden Funken und Schmutzpartikel auf konstruktiv einfache Weise kontrolliert in einen für den Bediener und die Laserbearbeitungsmaschine unkritischen Bereich abzuführen.

Diese Aufgabe wird gelöst durch eine Laserbearbeitungsmaschine gemäß den Merkmalen des Anspruches 1. Vorteilhafte Ausgestaltungen ergeben sich aus den abhängigen Ansprüchen.

Es wird eine Laserbearbeitungsmaschine, insbesondere eine Laserschneidmaschine, mit einem Maschinenrahmen und mit einer Brücke mit einem Laserbearbeitungskopf vorgeschlagen. Bei dem Laserbearbeitungskopf handelt es sich insbesondere um einen Laserschneidkopf. Der Maschinenrahmen weist zwei in einer ersten Richtung verlaufende Längsträger auf. Die Brücke verläuft in einer zweiten, quer zur ersten Richtung verlaufenden, Richtung. Die Brücke ist auf den zwei Längsträgern in der ersten Richtung verfahrbar angeordnet. In einem Bearbeitungsraum zwischen den zwei Längsträgern ist eine Werkstückebene der Laserbearbeitungsmaschine für die Aufnahme und Bearbeitung eines Werkstücks ausgebildet. Die Werkstückebene erstreckt sich in der ersten Richtung und der zweiten Richtung im Bereich eines Übergangs von der Brücke zu den zwei Längsträgern.

Der Begriff "Bearbeitungsraum" ist in der vorliegenden Anmeldung so zu verstehen, dass er das Raumvolumen aufweist, in dem das Werkstück zum Liegen kommt. Der Bearbeitungsraum ist somit in einer Richtung senkrecht zur Werkstückebene durch die Dicke des Werkstücks definiert und stellt das Raumvolumen dar, in dem ein von dem Laserbearbeitungskopf abgegebener Laserstrahl auf das Material des Werkstücks treffen kann. Dementsprechend liegt der Bearbeitungsraum in einer Betriebsanordnung der Laserbearbeitungsmaschine unterhalb des Laserbearbeitungskopfes.

Unter dem Begriff der "Werkstückebene" ist diejenige Ebene zu verstehen, in der das Werkstück auf einer Auflagefläche eines Schneidtisches der Laserbearbeitungsmaschine aufliegt. Ein Bereich oberhalb der Werkstückebene ist dabei dem Laserbearbeitungskopf zugewandt. Ein Bereich unterhalb der Werkstückebene ist von dem Laserbearbeitungskopf abgewandt.

Die erste Richtung und die zweite Richtung sind orthogonal aufeinandertreffende Richtungen eines kartesischen Koordinatensystems. Die erste Richtung stellt eine Längsrichtung oder X-Richtung der Laserbearbeitungsmaschine, die zweite Richtung eine Querrichtung oder Y-Richtung der Laserbearbeitungsmaschine und eine dritte Richtung eine Höhenrichtung oder Z-Richtung der Laserbearbeitungsmaschine dar.

Im Bereich des Übergangs von der Brücke zu den zwei Längsträgern ist erfindungsgemäß eine Funkenschutzvorrichtung angeordnet. Die Funkenschutzvorrichtung weist eine sich in der ersten Richtung erstreckende Hauptabweisfläche auf. Die Hauptabweisfläche ist quer zur ersten Richtung in Bezug auf die Werkstückebene in Richtung des Bearbeitungsraums in einem ersten Neigungswinkel kleiner 90° geneigt zur Ablenkung von Funken in den Bearbeitungsraum in einer dem Laserbearbeitungskopf abgewandten Richtung.

Die Funkenschutzvorrichtung ermöglicht damit die Ableitung von Funken und Schmutzpartikeln in einem Bereich unterhalb der Werkstückebene. Der Begriff "unterhalb der Werkstückebene" bezieht sich auf eine Betriebsanordnung der Laserbearbeitungsmaschine im Raum, so dass die Schmutzpartikel in Schwerkraftrichtung auf die dem Laserbearbeitungskopf abgewandte Seite und damit in den Bereich unterhalb der Unterseite des Werkstücks gelenkt werden.

Die erfindungsgemäß vorgeschlagene Funkenschutzvorrichtung ermöglicht es, von dem Werkstück abgetragenes Material (hierin auch als "Schmutz" oder "Schmutzpartikel" bezeichnet) in den Bereich unterhalb des bearbeiteten Werkstücks abzulenken. Dadurch kann ein Bereich oberhalb des Werkstücks und oberhalb der Werkstückebene von Schmutzpartikeln sauber und weitestgehend frei von Schmutzpartikeln gehalten werden. Die Funkenschutzvorrichtung stellt damit einen Komponentenschutz dar, der insbesondere den Übergangsbereich von der Brücke zu den zwei Längsträgern frei von Schmutzpartikeln hält. Gleichzeitig werden Schmutzpartikel von solchen Umfeldbereichen ferngehalten, in denen sich ein Bediener der Laserbearbeitungsmaschine aufhält.

Der erfindungsgemäßen Ausgestaltung der Funkenschutzvorrichtung liegt dabei die Beobachtung zugrunde, dass beim Schneiden des Werkstücks mit dem Laserbearbeitungskopf feiner Staub aufgewirbelt wird, wobei sich die dabei entstehenden Partikel im Wesentlichen horizontal, d.h. parallel zu einer X-Y-Ebene, und radial von der Bearbeitungsstelle weg verteilen. Insbesondere werden die Schmutzpartikel beim Bearbeitungsvorgang (Schneiden) des Werkstücks in einer zur Bewegung des Laserbearbeitungskopfes entgegengesetzten Richtung ausgeblasen. Die erfindungsgemäß ausgebildete Funkenschutzvorrichtung verhindert nicht nur ein Eindringen von Schmutzpartikeln in Maschinenteile im Übergangsbereich von der Brücke zu den zwei Längsträgern, sondern auch in ein Raumvolumen oberhalb der Werkstückebene.

Gemäß einer zweckmäßigen Ausgestaltung erstreckt sich die Hauptabweisfläche in einer dritten Richtung, die sich senkrecht zur ersten und zweiten Richtung erstreckt, über die Werkstückebene hinaus. Die dritte Richtung entspricht der oben bereits erwähnten Z-Richtung (Höhenrichtung) der Laserbearbeitungsmaschine. Die Hauptabweisfläche kann sich in der dritten Richtung über die Werkstückebene hinaus in Richtung des Laserbearbeitungskopfes erstrecken. Alternativ kann sich die Hauptabweisfläche in der dritten Richtung über die Werkstückebene hinaus in die von dem Laserbearbeitungskopf abgewandte Richtung erstrecken. Weiterhin alternativ kann sich die Hauptabweisfläche in der dritten Richtung sowohl in Richtung des Laserbearbeitungskopfes als auch von dem Laserbearbeitungskopf weg über die Werkstückebene hinaus erstrecken.

Es hat sich als zweckmäßig herausgestellt, wenn der erste Neigungswinkel zur Ablenkung von Funken in den Bearbeitungsraum in der dem Laserbearbeitungskopf abgewandten Richtung zwischen 70° und 88°, bevorzugt zwischen 75° und 87° beträgt.

Gemäß einer weiteren zweckmäßigen Ausgestaltung schließt sich an eine in der ersten Richtung verlaufende erste Kante der Hauptabweisfläche eine erste Zusatzabweisfläche an, die sich in Bezug auf die Werkstückebene mit einem zweiten Neigungswinkel, der kleiner als der erste Neigungswinkel ist, in Richtung des Laserbearbeitungskopfes erstreckt. Zweckmäßigerweise ist die erste Kante zwischen der Hauptabweisfläche und der ersten Zusatzabweisfläche oberhalb der Werkstückebene, in Richtung des Laserbearbeitungskopfes, ausgebildet. Die erste Zusatzabweisfläche ermöglicht einen weiter verbesserten Komponenten- und Bedienerschutz vor Schmutzpartikeln, die durch Bearbeitung des Werkstückes entstehen.

Eine weitere zweckmäßige Ausgestaltung sieht vor, dass sich an eine in der ersten Richtung verlaufende zweite Kante der Hauptabweisfläche eine zweite Zusatzabweisfläche anschließt, die sich in Bezug auf die Werkstückebene mit einem dritten Neigungswinkel in einer von dem Laserbearbeitungskopf weg gewandten Richtung erstreckt. Zweckmäßigerweise ist die zweite Kante zwischen der Hauptabweisfläche und der zweiten Zusatzabweisfläche unterhalb der Werkstückebene ausgebildet. In Richtung der Funkenschutzvorrichtung geschleuderte Schmutzpartikel können über die zweite Zusatzabweisfläche ähnlich einer "Rutsche" oder "Schanze" in den Bereich unterhalb der Werkstückebene abgeleitet werden. Hierdurch kann ein weiter verbesserter Schutz der Komponenten der Laserbearbeitungsmaschine erreicht werden.

Gemäß einer weiteren zweckmäßigen Ausgestaltung ist die Funkenschutzvorrichtung in einer ersten Alternative an dem Längsträger befestigt. Mit anderen Worten ist die Funkenschutzvorrichtung ortsfest an der Laserbearbeitungsmaschine angeordnet. Vorzugsweise erstreckt sich die Funkenschutzvorrichtung in der ersten Richtung über die gesamte Länge des Bearbeitungsraums entlang des Längsträgers. Hierdurch ist ein vollständiger Komponentenschutz gewährleistet.

Weiterhin ist es zweckmäßig, wenn die Funkenschutzvorrichtung zumindest abschnittsweise im Bereich einer sich im Wesentlichen parallel zur Werkstückebene erstreckenden Übergangsfläche, mit der die Funkenschutzvorrichtung an dem Längsträger befestigt ist, eine oder mehrere Aussparungen aufweist. Für den Fall, dass Schmutzpartikel in einen Zwischenraum zwischen der Funkenschutzvorrichtung und dem Längsträger gelangen, können die Schmutzpartikel über die eine oder die mehreren Aussparungen in den Bereich unterhalb der Werkstückebene fallen. Eine Akkumulation von Schmutzpartikeln in dem Zwischenraum zwischen der Funkenschutzvorrichtung und dem Längsträger kann dadurch vermieden werden. Reinigungsintervalle können dadurch entfallen oder reduziert werden.

In einer zweiten Alternative kann die Funkenschutzvorrichtung an der Brücke befestigt sein und sich mit der Brücke entlang der Längsträger des Maschinenrahmens bewegen. Die Funkenschutzvorrichtung kann dadurch kompakter, d.h. im Vergleich zur ersten Variante mit verringerter Länge in der ersten Richtung, aufgebaut werden. Dadurch, dass an den Längsträgern des Maschinenrahmens keine Funkenschutzvorrichtung oder andere Komponenten montiert sind, ist zudem der Zugang zum Bearbeitungsraum für einen Nutzer erleichtert.

Eine weitere zweckmäßige Ausgestaltung sieht vor, dass die Funkenschutzvorrichtung aus einem gut wärmeleitenden Material besteht. Als wärmeleitende Materialien kommen insbesondere Aluminium oder Stahl oder Legierungen davon in Frage. Funkenschutzvorrichtungen aus einem der genannten Materialien können auf einfache Weise zu verhältnismäßig günstigen Kosten bereitgestellt werden.

Die Funkenschutzvorrichtung kann pro Längsträger als einstückiges Biegebauteil ausgebildet sein. Alternativ kann die Funkenschutzvorrichtung aus mehreren Teilen zusammengesetzt sein. Ein erstes Teil kann z.B. die Hauptabweisfläche bilden. Die erste und/oder zweite Zusatzabweisfläche kann durch ein zweites und/oder drittes Teil ausgebildet sein.

Die Erfindung wird nachfolgend näher anhand von Ausführungsbeispielen in der Zeichnung erläutert. Es zeigen:
- Fig. 1: eine schematische perspektivische Darstellung einer erfindungsge-mäßen Laserbearbeitungsmaschine;
- Fig. 2: eine Ansicht der Laserbearbeitungsmaschine aus Fig. 1 in einer Aufsicht von vorne;
- Fig. 3 bis Fig. 5: unterschiedliche Ausgestaltungsvarianten einer Funkenschutzvorrichtung, die jeweils an einer Brücke der Laserbearbeitungsmaschine befestigt sind; und
- Fig. 6 bis Fig. 8: unterschiedliche Ausführungsbeispiele einer Funkenschutzvorrichtung, die jeweils an einem Maschinenrahmen der Laserbearbeitungsmaschine befestigt sind.

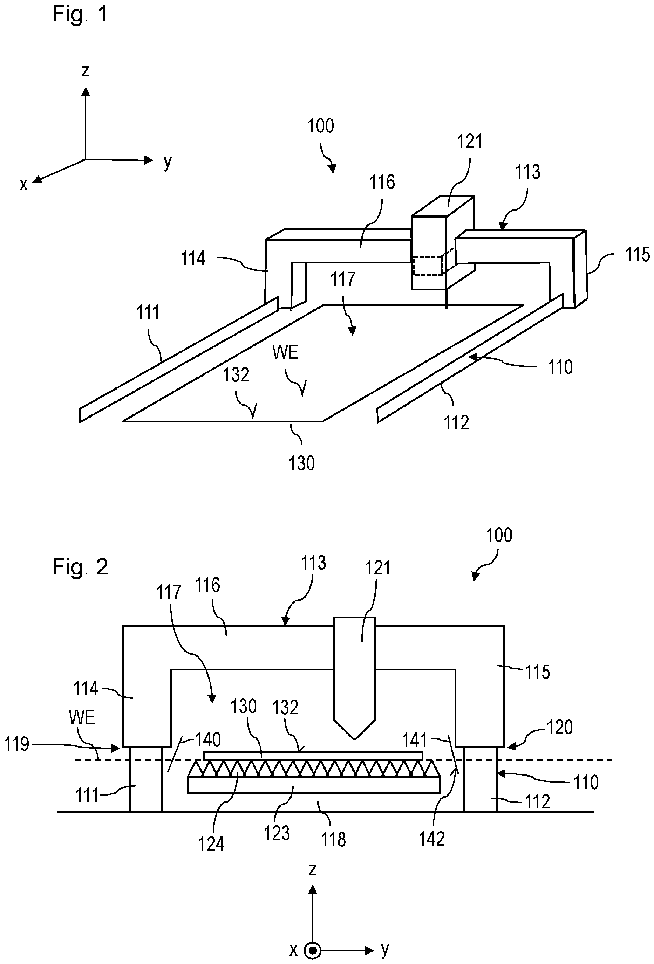

Fig. 1 zeigt eine perspektivische Darstellung einer erfindungsgemäßen Laserbearbeitungsmaschine 100 in Gestalt einer Laserschneidmaschine. In Fig. 1 und auch in den weiteren Figuren 2 bis 8 ist ein räumliches Koordinatensystem zur Beschreibung der Richtungen der Laserbearbeitungsmaschine 100 wiedergegeben. Die X-Richtung oder erste Richtung entspricht einer Längsrichtung der Laserbearbeitungsmaschine 100. Die Y-Richtung oder zweite Richtung entspricht einer Querrichtung der Laserbearbeitungsmaschine 100. Die Z-Richtung oder dritte Richtung entspricht einer Höhenrichtung der Laserbearbeitungsmaschine 100. Die X-, Y- und Z-Richtung stehen dabei orthogonal aufeinander.

Die Laserbearbeitungsmaschine 100 weist einen Maschinenrahmen 110 auf, der zwei in der Längsrichtung (X) verlaufende Längsträger 111, 112 aufweist. Die Längsträger 111, 112 verbindendende Querträger oder -bauteile des Maschinenrahmens 110 sind der Übersichtlichkeit halber nicht dargestellt. Quer zur Längsrichtung (X) verläuft in Querrichtung (Y) eine Brücke 113. Die Brücke 113 besteht aus einer Traverse 116, die sich in der Querrichtung (Y) erstreckt, wobei an deren gegenüber liegenden Enden zwei in Höhenrichtung (Z) verlaufende Brückenfüße 114, 115 angeordnet sind. An der Traverse 116 der Brücke 113 ist ein Laserbearbeitungskopf 121, insbesondere ein Laserschneidkopf, angeordnet.

Die Brückenfüße 114, 115 erstrecken sich von den Enden der Traverse 116 nach unten in Richtung der ihnen zugeordneten Längsträger 111, 112. Die Brückenfüße 114, 115 sind mit entsprechenden, nicht näher dargestellten Führungskomponenten mit den Längsträgern 111, 112 derart verbunden, dass mittels einer nicht dargestellten Aktuatorik eine Bewegung in Längsrichtung (X) ermöglicht ist. Dadurch ist die Brücke 113 mit dem Laserbearbeitungskopf 121 auf den zwei Längsträgern 111, 112 in Längsrichtung (X) verfahrbar angeordnet. Der Laserbearbeitungskopf 121 kann durch eine weiter nicht dargestellte Aktuatorik entlang der Traverse 116 in Querrichtung sowie in Höhenrichtung (Z) verfahren werden.

Zwischen den zwei Längsträgern 111, 112 ist ein Bearbeitungsraum 117 mit einem Schneidtisch 123 (siehe Fig. 2) ausgebildet. Der Schneidtisch 123 weist einen Schneidrost 124 auf, auf dem ein zu bearbeitendes Werkstück 130 mit seiner unteren Werkstückoberfläche aufliegt, wodurch eine obere Werkstückoberfläche 132 dem Laserbearbeitungskopf zugewandt ist. In dem Bearbeitungsraum 117 ist dadurch eine Werkstückebene WE der Laserbearbeitungsmaschine 100 definiert. Die Werkstückebene WE stellt diejenige Ebene in der Laserbearbeitungsmaschine 100 bzw. im Raum dar, in der das Werkstück 130 auf dem Schneidrost 124 des Schneidtisches 123 aufliegt (siehe Fig. 2). In Schwerkraftrichtung unterhalb des Schneidtischs 123 ist ein Raumvolumen ausgebildet, das nachfolgend als Auffangraum 118 bezeichnet wird.

Der Bearbeitungsraum 117 ist durch das Raumvolumen des auf dem Schneidrost 124 des Schneidtisches 123 aufliegenden Werkstücks 130 gebildet. Bei einem dünnen Werkstück 130 kann der Bearbeitungsraum 117 in etwa mit der Werkstückebene WE übereinstimmen. Bei einem (z.B. mehrere Zentimeter) dicken Werkstück 130 erstreckt sich der Bearbeitungsraum 117 von der Werkstückebene WE entsprechend der Dicke des Werkstücks 130 in Richtung des Laserbearbeitungskopfes 121, wie dies z.B. die Seitenansicht der Laserbearbeitungsmaschine 100 von vorne in Fig. 2 zeigt.

Die Werkstückebene WE bzw. der Bearbeitungsraum 117 erstrecken sich in Längs-und Querrichtung (X, Y) in etwa im Bereich eines Übergangs 119, 120 von der Brücke 113 zu den zwei Längsträgern 111, 112. Dies kann am besten der Fig. 2 entnommen werden. Im Bereich des Übergangs 119, 120 sind nicht näher im Detail dargestellte Führungselemente und/oder Antriebselemente angeordnet, durch die die Brückenfüße 114, 115 in Längsrichtung (X) entlang der Längsträger 111, 112 bewegt werden können. In diesem Bereich des Übergangs 119, 120 können neben dazu erforderlichen mechanischen Komponenten auch entsprechende elektrische Einrichtungen angeordnet sein.

Zum Schutz der im Bereich des Übergangs 119, 120 angeordneten Komponenten sind im Bereich des Übergangs jeweilige Funkenschutzvorrichtungen 140, 141 angeordnet, die eine sich in der Längsrichtung erstreckende Hauptabweisfläche 142 aufweisen. In der nachfolgenden Beschreibung wird nur noch auf die dem Übergang 120 zugeordnete Funkenschutzvorrichtung 141 Bezug genommen. Die nachfolgenden Erläuterungen gelten entsprechend für die dem Übergang 119 zugeordnete Funkenschutzvorrichtung 140.

Die Hauptabweisfläche 142 der Funkenschutzvorrichtung 141 ist quer zur Längsrichtung (X) in Bezug auf die Werkstückebene WE in Richtung des Bearbeitungsraums 117 in einem Winkel kleiner 90° geneigt, um eine Ablenkung von Funken und Schmutzpartikeln in den Auffangraum 118, d.h. einer dem Laserbearbeitungskopf 121 bzw. dem Bearbeitungsraum 117 abgewandten Richtung zu bewirken. Der Winkel der Hauptabweisfläche 142 relativ zur Werkstückebene wird nachfolgend auch als erster Neigungswinkel W1 bezeichnet. Der erste Neigungswinkel W1 ist zweckmäßigerweise zwischen 70° und 88°, und bevorzugt zwischen 76° und 87°.

Wie gut aus Fig. 2 zu erkennen ist, erstreckt sich die Hauptabweisfläche 142 in der Höhenrichtung (Z) sowohl nach oben (d.h. dem Laserbearbeitungskopf 121 zugewandt) als auch nach unten (d.h. vom Laserbearbeitungskopf 121 abgewandt in Richtung des Auffangraums 118) über die Werkstückebene WE hinaus. Hierdurch wird sichergestellt, dass beim Bearbeitungsvorgang verschiedener, unterschiedlich dicker Werkstücke 130 vom Werkstück abgetragenes Material in Form von Schmutzpartikeln und Funken, die parallel zur Werkstückebene WE in Richtung des Übergangsbereichs 120 ausgeblasen werden, durch die Funkenschutzvorrichtung 141 in den Auffangraum 118 unterhalb der Werkstückebene WE abgelenkt werden.

Im Ergebnis können der Bearbeitungsraum 117 und die Werkstückoberfläche 132 sauber gehalten werden. Die Funkenschutzvorrichtung 141 stellt darüber hinaus einen Komponentenschutz dar, da das Eindringen von Schmutzpartikeln in die mechanischen und elektrischen Komponenten im Übergangsbereich 120 zumindest weitgehend unterbunden wird.

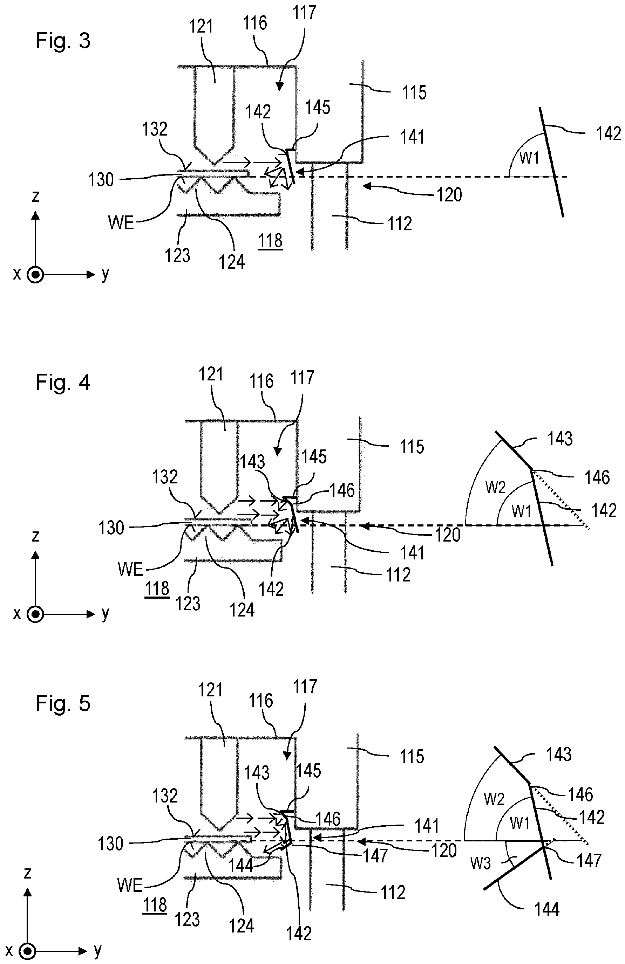

Die Figuren 3 bis 8 zeigen jeweils einen Ausschnitt eines rechten Teils der in Fig. 2 dargestellten Laserbearbeitungsmaschine 100, aus denen jeweils der Übergangsbereich 120 und verschiedene Ausgestaltungsvarianten der Funkenschutzvorrichtung 141 dargestellt sind. Rechts neben der Laserbearbeitungsmaschine 100 ist zur Verdeutlichung der Winkelbeziehung der unterschiedlichen Abweisflächen der Funkenschutzvorrichtung 141 jeweils ein die Winkelbeziehungen darstellendes Diagramm gezeigt.

Die Figuren 3 bis 5 zeigen eine Ausgestaltungsvariante, bei der die Funkenschutzvorrichtung 141 am Brückenfuß 115 der Brücke 113 befestigt ist und sich bei einer Bewegung der Brücke 113 in Längsrichtung (X) mit dieser bewegt. Die Funkenschutzvorrichtung 141 erstreckt sich in Längsrichtung (X) über die Breite der des Brückenfußes 115.

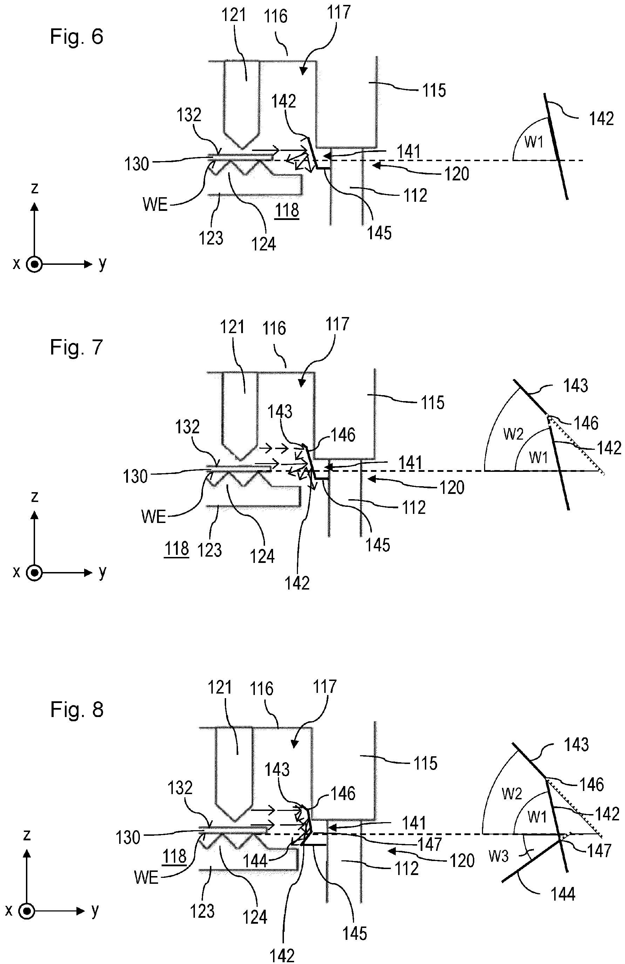

Demgegenüber zeigen die Ausführungsbeispiele gemäß den Figuren 6 bis 8 jeweils eine Variante, bei der die Funkenschutzvorrichtung 141 an dem Längsträger 112 befestigt ist. Bei dieser Ausgestaltungsvariante erstreckt sich die Funkenschutzvorrichtung 141 in der Längsrichtung (X) über die gesamte Länge des Bearbeitungsraums 117 entlang des Längsträgers 112.

Die Figuren 3 und 6 zeigen jeweils ein Ausführungsbeispiel, bei der die Funkenschutzvorrichtung 141 ausschließlich die bereits erwähnte Hauptabweisfläche 142 aufweist. Diese ist in einem ersten Neigungswinkel W1 in Bezug auf die Werkstückebene WE geneigt.

Die Figuren 4 und 7 zeigen eine modifizierte Variante, bei der sich an eine in der Längsrichtung (X) verlaufende erste Kante 146 der Hauptabweisfläche 142 eine erste Zusatzabweisfläche 143 anschließt, die sich in Bezug auf die Werkstückebene mit einem zweiten Neigungswinkel W2, der kleiner als der erste Neigungswinkel W1 ist, in Richtung des Laserbearbeitungskopfes 121 erstreckt. Durch das Vorsehen der ersten Zusatzabweisfläche 143 oberhalb der Hauptabweisfläche142 (d.h. weiter in Richtung des Bearbeitungsraums 117 ragend) kann die Effizienz der Funkenschutzvorrichtung 141 verbessert werden, indem das Eindringen von Schmutzpartikeln in einen Zwischenraum zwischen der Funkenschutzvorrichtung 141 und den Bereich des Übergangs 120 verhindert wird. Dies gilt insbesondere für die Variante gemäß Fig. 7, bei der der Zwischenraum von oben offen ist. Die erste Kante 146 zwischen der Hauptabweisfläche 142 und der ersten Zusatzabweisfläche 143 ist zweckmäßigerweise oberhalb der Werkstückebene WE, insbesondere oberhalb der oberen Werkstückfläche 132 des Werkstücks 130, in Richtung des Bearbeitungskopfes 121, ausgebildet.

In einer nochmals veränderten Ausgestaltungsvariante, die in den Figuren 5 und 8 gezeigt ist, ist zusätzlich zu der ersten Zusatzabweisfläche 143 eine zweite Zusatzabweisfläche 144 vorgesehen. Die zweite Zusatzabweisfläche 144, die ähnlich einer Schanze oder einer Rutsche wirkt, schließt sich an eine in der Längsrichtung (X) verlaufende zweite Kante 147 der Hauptabweisfläche 142 an. Die zweite Zusatzabweisfläche 144 erstreckt sich in Bezug auf die Werkstückebene WE mit einem dritten Neigungswinkel W3 in einer von dem Laserbearbeitungskopf 121 weg gewandten Richtung. Die zweite Zusatzabweisfläche 144 sorgt dafür, dass die Schmutzpartikel, die auf die Hauptabweisfläche 142 und/oder die erste Zusatzabweisfläche 143 auftreffen und nach unten abgelenkt werden, nach unten in Richtung des Auffangraums 118 unterhalb des Werkstücks 130 geleitet werden.

Ist die Funkenschutzvorrichtung 141 an dem Längsträger 112 befestigt, erfolgt die Befestigung der Funkenschutzvorrichtung 141 mit Hilfe einer Übergangsfläche 145, die vorzugsweise im Wesentlichen parallel zur Werkstückebene WE ausgebildet ist. Auch davon abweichende Befestigungswinkel sind denkbar. Bevorzugt weist die Übergangsfläche 145 zumindest abschnittsweise eine oder mehrere (nicht gezeigte) Aussparungen auf, um sich im Zwischenraum zwischen der Funkenschutzvorrichtung 141 und dem Übergangsbereich aus Brückenfuß 115 und Längsträger 112 ansammelnde Schmutzpartikel nach unten abführen zu können.

Die Funkenschutzvorrichtung 141 besteht aus einem gut wärmeleitenden Material, wobei hier insbesondere Aluminium oder Stahl oder Legierungen davon in Betracht kommen. Auch andere Materialien, die gut wärmeleitend sind, sind denkbar.

Die Funkenschutzvorrichtung kann als einstückiges Bauteil ausgebildet sein. Insbesondere ist die Funkenschutzvorrichtung dann als Biegebauteil ausgebildet. Weist die Funkenschutzvorrichtung neben der Hauptabweisfläche zumindest eine der Zusatzabweisflächen auf, so kann diese auch durch Verbindung mehrerer Einzelkomponenten erzeugt sein.

### B ezugszei chenli ste

- 100: Laserbearbeitungsmaschine
- 110: Maschinenrahmen
- 111: Längsträger
- 112: Längsträger
- 113: Brücke
- 114: Brückenfuß
- 115: Brückenfuß
- 116: Traverse
- 117: Bearbeitungsraum
- 118: Auffangraum
- 119: Übergang
- 120: Übergang
- 121: Laserbearbeitungskopf (Laserschneidkopf)
- 123: Schneidtisch
- 124: Schneidrost
- 130: Werkstück
- 132: obere Werkstückfläche (dem Bearbeitungskopf zugewandt)
- 140: Funkenschutzvorrichtung
- 141: Funkenschutzvorrichtung
- 142: Hauptabweisfläche
- 143: erste Zusatzabweisfläche
- 144: zweite Zusatzabweisfläche
- 145: Übergangfläche
- 146: erste Kante zwischen Hauptabweisfläche und erster Zusatzabweisfläche
- 147: zweite Kante zwischen Hauptabweisfläche und zweiter Zusatzabweisfläche
- WE: Werkstückebene
- X: erste Richtung (Längsrichtung)
- Y: zweite Richtung (Querrichtung)
- Z: dritte Richtung (Höhenrichtung)
- W1: erster Neigungswinkel
- W2: zweiter Neigungswinkel
- W3: dritter Neigungswinkel

## Patentansprüche

1. Laserbearbeitungsmaschine (100), insbesondere Laserschneidmaschine, mit einem Maschinenrahmen (110), der zwei in einer ersten Richtung (X) verlaufende Längsträger (111, 112) aufweist, und mit einer in einer zweiten, quer zur ersten Richtung (X) verlaufenden, Richtung (Y) verlaufenden Brücke (113) mit einem Laserbearbeitungskopf (121), die auf den zwei Längsträgern (111, 112) in der ersten Richtung (X) verfahrbar angeordnet ist, wobei in einem Bearbeitungsraum (117) zwischen den zwei Längsträgern (111, 112) eine Werkstückebene (WE) der Laserbearbeitungsmaschine (100) für die Aufnahme und Bearbeitung eines Werkstücks (130) ausgebildet ist, wobei die Werkstückebene (WE) sich in der ersten Richtung (X) und der zweiten Richtung (Y) im Bereich eines Übergangs (119, 120) von der Brücke (113) zu den zwei Längsträgern (111, 112) erstreckt,
wobei im Bereich des Übergangs (119, 120) eine Funkenschutzvorrichtung (140, 141) angeordnet ist, die eine sich in der ersten Richtung (X) erstreckende Hauptabweisfläche (142) aufweist, wobei die Hauptabweisfläche (142) quer zur ersten Richtung (X) in Bezug auf die Werkstückebene (WE) in Richtung des Bearbeitungsraums (117) in einem ersten Neigungswinkel (W1) kleiner 90° geneigt ist zur Ablenkung von Funken in den Bearbeitungsraum (117) in einer dem Laserbearbeitungskopf (121) abgewandten Richtung.

2. Laserbearbeitungsmaschine nach Anspruch 1, **dadurch gekennzeichnet, dass** die Hauptabweisfläche (142) sich in einer dritten Richtung (Z), die sich senkrecht zur ersten und zweiten Richtung (X, Y) erstreckt, über die Werkstückebene (WE) hinaus erstreckt.

3. Laserbearbeitungsmaschine nach Anspruch 1 oder 2, **dadurch gekennzeichnet, dass** der erste Neigungswinkel (W1) zwischen 70° und 88°, bevorzugt 75° und 87°, beträgt.

4. Laserbearbeitungsmaschine nach einem der vorhergehenden Ansprüche, **dadurch gekennzeichnet, dass** sich an eine in der ersten Richtung (X) verlaufende erste Kante (146) der Hauptabweisfläche (142) eine erste Zusatzabweisfläche (143) anschließt, die sich in Bezug auf die Werkstückebene (WE) mit einem zweiten Neigungswinkel (W2), der kleiner als der erste Neigungswinkel (W1) ist, in Richtung des Laserbearbeitungskopfs (121) erstreckt.

5. Laserbearbeitungsmaschine nach Anspruch 4, **dadurch gekennzeichnet, dass** die erste Kante (146) zwischen der Hauptabweisfläche (142) und der ersten Zusatzabweisfläche (143) oberhalb der Werkstückebene (WE), in Richtung des Laserbearbeitungskopfs (121), ausgebildet ist.

6. Laserbearbeitungsmaschine nach einem der vorhergehenden Ansprüche, **dadurch gekennzeichnet, dass** sich an eine in der ersten Richtung (X) verlaufende zweite Kante (147) der Hauptabweisfläche (142) eine zweite Zusatzabweisfläche (144) anschließt, die sich in Bezug auf die Werkstückebene (WE) mit einem dritten Neigungswinkel (W3) in einer von dem Laserbearbeitungskopf (121) weg gewandten Richtung erstreckt.

7. Laserbearbeitungsmaschine nach Anspruch 6, **dadurch gekennzeichnet, dass** die zweite Kante (147) zwischen der Hauptabweisfläche (142) und der zweiten Zusatzabweisfläche (144) unterhalb der Werkstückebene (WE) ausgebildet ist.

8. Laserbearbeitungsmaschine nach einem der Ansprüche 1 bis 7, **dadurch gekennzeichnet, dass** die Funkenschutzvorrichtung (140, 141) an dem Längsträger (111, 112) befestigt ist.

9. Laserbearbeitungsmaschine nach Anspruch 8, **dadurch gekennzeichnet, dass** die Funkenschutzvorrichtung (140, 141) sich in der ersten Richtung (X) über die gesamte Länge des Bearbeitungsraums (117) entlang des Längsträgers (111, 112) erstreckt.

10. Laserbearbeitungsmaschine nach Anspruch 8 oder 9, **dadurch gekennzeichnet, dass** die Funkenschutzvorrichtung (140, 141) zumindest abschnittsweise im Bereich einer sich im Wesentlichen parallel zur Werkstückebene (WE) erstreckenden Übergangsfläche (145) eine oder mehrere Aussparungen aufweist.

11. Laserbearbeitungsmaschine nach einem der Ansprüche 1 bis 7, **dadurch gekennzeichnet, dass** die Funkenschutzvorrichtung (140, 141) an der Brücke (113) befestigt ist und sich mit der Brücke (113) bewegt.

12. Laserbearbeitungsmaschine nach einem der vorhergehenden Ansprüche, **dadurch gekennzeichnet, dass** die Funkenschutzvorrichtung (140, 141) aus einem gut wärmeleitenden Material, insbesondere Aluminium oder Stahl oder Legierungen davon, besteht.

13. Laserbearbeitungsmaschine nach einem der vorhergehenden Ansprüche, **dadurch gekennzeichnet, dass** die Funkenschutzvorrichtung (140, 141) als Biegebauteil ausgebildet ist.
